# EUROPÄISCHE PATENTSCHRIFT

(11) **EP 3 591 812 B1**
(45) Veröffentlichungstag und Bekanntmachung des Hinweises auf die Patenterteilung: **20.04.2022**
(21) Anmeldenummer: 19183715.2
(22) Anmeldetag: 01.07.2019
(51) Int. Cl.: H02K 5/04, H02K 5/24, H02K 15/02, H02K 5/08

(54) **ELEKTROMOTOR UND VERFAHREN ZUM HERSTELLEN EINES ELEKTROMOTORS**
ELECTRIC MOTOR AND METHOD FOR PRODUCING SAME
MOTEUR ÉLECTRIQUE ET PROCÉDÉ DE FABRICATION D'UN MOTEUR ÉLECTRIQUE

(30) Priorität: 02.07.2018 LU 100864
(43) Veröffentlichungstag der Anmeldung: 08.01.2020
(73) Patentinhaber: Ovalo GmbH, 65555 Limburg (DE)
(72) Erfinder:
(74) Vertreter: Hoffmann, Jürgen

(56) Entgegenhaltungen:
- JP-A- H 089 601
- JP-A- 2015 076 981
- US-A1- 2016 218 597

## Beschreibung

Die Erfindung betrifft ein Verfahren zum Herstellen eines Elektromotors, bei dessen Ausführung ein Stator in einem Motorgehäuse befestigt wird.

Die Erfindung betrifft außerdem einen Elektromotor, der nach einem solchen Verfahren hergestellt ist und einen Elektromotor, der einen Stator und ein Motorgehäuse aufweist, in dem der Stator fixiert ist.

Elektromotore, insbesondere solche, die als Innenläufer ausgebildet sind, weisen zumeist ein Motorgehäuse auf, in dem ein Stator drehfest befestigt ist. Das Befestigen erfolgt zumeist mittels einer Presspassung oder durch Kleben.

Aus DE 199 35 723 B4 ist beispielsweise ein Verfahren zur Herstellung einer Elektromotoranordnung bekannt, bei dem ein Stator und ein Motorgehäuse mittels eines Klebeschrumpfprozesses zusammengefügt werden.

Aus DE 10 2010 028 989 A1 ist ein Verfahren zur Herstellung eines Elektromotors mit einem in einem Motorgehäuse aufgenommen Stator bekannt, bei dem zur Montage zunächst das Motorgehäuse auf eine Fügetemperatur erwärmt wird und anschließend der Stator in das Motorgehäuse eingesetzt wird, wobei zusätzlich der Außenmantel des Stators mit der Innenseite des Motorgehäuses verklebt wird.

JP 2015 076981 A offenbart den Einbau eines Stators in das Gehäuse eines Elektromotors. Der Stator wird zunächst außerhalb des Gehäuses in einen Innenrahmen gepresst. Anschließend wird eine Bodenplatte des Innenrahmens an das Gehäuse geschraubt. Der Innenrahmen weist einen zylindrischen Teil auf. In einen Spalt zwischen dem Innenrahmen und dem Gehäuse wird ein Harz eingegeben, das zu einem elastischen Material aushärtet.

Elektromotore sind oftmals, insbesondere wenn sie in ihrem Maximallastbereich betrieben werden, akustisch auffällig. Dies ist insbesondere problematisch, wenn Elektromotore in einem Kraftfahrzeug zum Einsatz kommen, weil die Fahrzeuginsassen von einem Elektromotor erzeugte Geräusche als störend empfinden können, oder auf Grund der Geräusche vermuten, dass ein Defekt des Fahrzeuges vorliegt.

Es ist daher die Aufgabe der vorliegenden Erfindung, ein Verfahren anzugeben, das es ermöglicht einen Elektromotor herzustellen, der besonders leise arbeitet.

Die Aufgabe wird durch ein Verfahren gelöst, das dadurch gekennzeichnet ist, dass der Stator in einem ersten Schritt mittels wenigstens eines Federelements in dem Motorgehäuse reibschlüssig fixiert wird, und dass in einem zweiten Schritt die Freiräume innerhalb des Stators mit Ausnahme eines Aufnahmeraumes für einen Rotor wenigstens teilweise, insbesondere vollständig, mit einem härtenden Ausgießmaterial ausgegossen werden.

Es ist eine weitere Aufgabe der vorliegenden Erfindung, einen Elektromotor anzugeben, der besonders leise arbeitet.

Die weitere Aufgabe wird durch einen Elektromotor gelöst, der dadurch gekennzeichnet ist, dass der Stator mittels wenigstens eines Federelements in dem Motorgehäuse reibschlüssig fixiert ist und die Freiräume innerhalb des Stators mit Ausnahme eines Aufnahmeraumes, in dem ein Rotor angeordnet ist, mit einem Ausgießmaterial ausgegossen sind.

Gelöst werden diese Aufgaben durch ein Verfahren nach Anspruch 1 und einen Motor nach Anspruch 6.

In erfindungsgemäßer Weise wurde erkannt, dass eine wesentliche Ursache für eine akustische Auffälligkeit eines Elektromotors oftmals in der Ankopplung des Stators an das Motorgehäuse begründet ist. Dies insbesondere, wenn der Stator und das Motorgehäuse aus unterschiedlichen Materialien, insbesondere unterschiedlich steifen Materialien und/oder Materialien mit unterschiedlichen Wärmeausdehnungskoeffizienten, hergestellt sind. Beispielsweise sind Materialpaarungen, bei denen das Motorgehäuse aus Aluminium und das zu befestigende Statorjoch aus Weicheisen besteht, besonders problematisch. Es wurde in erfindungsgemäßer Weise erkannt, dass dies insbesondere daran liegt, dass der beispielsweise aus Elektroblechen gefertigte Stator, insbesondere bei Elektromotoren mit hoher Leistungsdichte, bei denen die magnetischen Kräfte besonders hoch sind, fortlaufend stark verformt wird. Beispielsweise kann es vorkommen, dass der Stator zwei Mal pro elektrischer Umdrehung zu einem Oval verformt wird. Das Motorgehäuse wird hierbei nicht mitgezogen, vor allem wenn es aus (unmagnetischem) Aluminium besteht, was zu einer Relativbewegung zwischen dem Stator und dem Motorgehäuse führen kann und sogar so weit gehen kann, dass das Oval fortlaufend gegen das runde Motorgehäuse schlägt und ein hörbares und messbares Geräusch verursacht.

Dieser Effekt wird noch verstärkt, wenn der Elektromotor warm wird. Das liegt an den unterschiedlichen Wärmeausdehnungskoeffizienten von Stator und Motorgehäuse, insbesondere wenn das Gehäuse aus Aluminium besteht. Ein Aluminium-Motorgehäuse dehnt sich bei Erwärmung deutlich mehr aus, als der Stator, so dass der Stator noch mehr freien Raum erhält, sich zu verformen und ggf. gegen das runde Motorgehäuse zu schlagen. Besonders gravierend ist es, wenn der Elektromotor von außen erwärmt wird. In dem Fall ist die relative Ausdehnung zwischen Stator und Motorgehäuse am höchsten, da das Motorgehäuse durch die von außen einwirkende Erwärmung ohnehin eine höhere Temperatur als der Stator besitzt. In diesem Fall ist das akustische Verhalten des Elektromotors zumeist noch viel auffälliger.

Die Erfindung hat den ganz besonderen Vorteil, dass einerseits durch die im ersten Schritt hergestellte reibschlüssige Verbindung gewährleistet wird, dass der Stator das von dem Elektromotor erzeugte Drehmoment zuverlässig an dem Motorgehäuse abstützen kann und dass andererseits durch den im zweiten Schritt hergestellten Verguss, insbesondere Vollverguss (mit Ausnahme der Aufnahme für den Rotor), die mechanische Festigkeit des Stators und dessen mechanische Anbindung an das Motorgehäuse derart versteift wird, dass Verformungen weitgehend vermieden sind. Die akustischen Unterscheide sind deutlich hör und messbar im Vergleich zu einem Elektromotor ohne Verguss.

Die Erfindung hat den weiteren ganz besonderen Vorteil, dass die Temperatur der Wicklungsdrähte durch den Vollverguss im Betrieb des Elektromotors deutlich niedriger ist, als ohne Vollverguss. Zwar ist die Temperatur des Statorjochs hierdurch etwas höher, was jedoch keine Nachteile hat, während eine niedrigere Wicklungstemperatur bedeutet, dass der Elektromotor eine höhere Leistung erbringen kann und dass eine geringere Gefahr besteht, dass die Wicklung durch Überhitzung zerstört wird.

Das Federelement kann vorteilhaft beispielsweise als, insbesondere geschlitzte, Toleranzhülse ausgebildet sein. Insbesondere kann vorteilhaft vorgesehen sein, dass das Federelement aus einem wellenförmigen Blechband hergestellt ist oder dass das Federelement eine wellenförmige Prägung aufweist. Es ist insbesondere auch möglich, dass mehrere koaxial angeordnete, aber axial beabstandete Federelemente verwendet werden, um den Stator in dem ersten Schritt innerhalb des Motorgehäuses zu fixieren. Das Federelement kann vorteilhaft beispielsweise aus Stahl, insbesondere aus Federstahl, hergestellt sein.

Bei einer vorteilhaften Ausführung wird der Stator in dem ersten Schritt mittels eines hülsenförmigen Federelements, derart in dem Motorgehäuse fixiert, dass das hülsenförmige Federelement den Stator umgibt und einerseits an einer Außenumfangsfläche des Stators und andererseits an einer Innenumfangsfläche des Motorgehäuses anliegt. Dies ist insbesondere besonders einfach möglich, wenn die Außenumfangsfläche des Stators kreiszylinderförmig ausgebildet ist und/oder die Innenumfangsfläche des Motorgehäuses kreiszylinderförmig ausgebildet ist.

Bei einer ganz besonders vorteilhaften Ausführung ist in der Innenseite des Motorgehäuses eine umlaufende Ausnehmung, insbesondere eine umlaufende Nut oder ein umlaufender Rücksprung, ausgebildet, die die Innenumfangsfläche aufweist, an der das hülsenförmige Federelement anliegt. Zum Fixieren des Stators wird hierbei zunächst das hülsenförmige Federelement in die Ausnehmung eingelegt. Dies hat den besonderen Vorteil, dass das Federelement in axialer Richtung fixiert ist. Anschließend wird der Stator axial, insbesondere bis zum Erreichen eines Anschlages, in das Federelement eingepresst und so relativ zu dem Motorgehäuse reibschlüssig fixiert. Auf einen Anschlag kann jedoch auch verzichtet werden. Vielmehr kann vorteilhaft auch vorgesehen sein, dass der Stator auf seine Sollposition eingepresst wird, wobei durch die reibschlüssige Verbindung mittels des Federelements sicher gestellt ist, dass der Stator anschließend in dieser Sollposition verbleibt.

Alternativ ist es auch möglich, dass in der Außenseite des Stators eine umlaufende Ausnehmung, insbesondere eine umlaufende Nut oder ein umlaufender Rücksprung, ausgebildet ist, die die Außenumfangsfläche aufweist, an der das hülsenförmige Federelement anliegt. Zum Fixieren des Stators wird bei dieser Ausführung zunächst das hülsenförmige Federelement in die Ausnehmung eingelegt und anschließend der Stator samt dem Federelement axial in das Motorgehäuse, insbesondere bis zum Erreichen eines Anschlages, eingeschoben und so relativ zu dem Motorgehäuse reibschlüssig fixiert.

Insbesondere auf die oben beispielhaft beschriebenen Arten ist es problemlos möglich, dass durch den ersten Schritt eine Reibschlussverbindung hergestellt wird, deren Haltemoment größer ist, als das maximale Motordrehmoment des herzustellenden Elektromotors. Vorzugsweise wird durch den ersten Schritt eine Reibschlussverbindung hergestellt, die wenigstens zehnmal größer, ganz insbesondere mehr als fünfzigmal größer, als das maximale Motordrehmoment des herzustellenden Elektromotors ist.

Bei einer besonders vorteilhaften Ausführung wird wenigstens ein Teil des Zwischenraumes zwischen dem Stator und dem Motorgehäuse mit dem härtenden Ausgießmaterial ausgegossen. Alternativ oder zusätzlich kann vorteilhaft auch vorgesehen sein, dass wenigstens ein Teil des Zwischenraumes zwischen einer Außenumfangsfläche des Stators und einer Innenumfangsfläche des Motorgehäuses mit dem härtenden Ausgießmaterial ausgegossen wird. Auf diese Weise wird vorteilhaft eine zusätzliche Aussteifung und eine besonders gute Halteverbindung des Stators zu dem Motorgehäuse erreicht.

Vorzugsweise erfolgt das Ausgießen wenigstens eines Teils des Zwischenraumes zwischen dem Stator und dem Motorgehäuse in der Weise, dass das Federelement frei von Ausgießmaterial bleibt und/oder dass eine umlaufende Ausnehmung, insbesondere eine umlaufende Nut oder ein umlaufender Rücksprung, in der das Federelement wenigstens teilweise angeordnet ist, nicht ausgegossen wird. Hierdurch wird vorteilhaft erreicht, dass die Haltefunktion des Federelements vollständig erhalten bleibt. Um zu Verhindern, dass Ausgießmaterial zu dem Federelement gelangt kann insbesondere wenigstens eine Dichtungsvorrichtung vorhanden sein, die den Bereich, in dem das Federelement angeordnet ist, von dem auszugießenden Bereich abschließt. Beispielsweise kann hierzu in dem Zwischenraum zwischen dem Stator und dem Motorgehäuse ober und unterhalb des Federelements jeweils ein elastischer O-Ring als Dichtungsvorrichtung angeordnet sein.

Es können, alternativ oder zusätzlich, auch konstruktive Gestaltungen der Innenseite des Motorgehäuses dazu ausgebildet sein, den Bereich des Federelements frei von Ausgießmaterial zu halten. Konstruktive Gestaltungen können beispielsweise radiale Vorsprünge, Absätze und/oder Passungen sein.

Bei einer besonders vorteilhaften Ausführung wird lediglich eine Seite des Federelements frei von Ausgießmaterial gehalten. Somit kann beispielsweise zwischen Federelement und Motorgehäuse und/oder zwischen Federelement und Stator Ausgießmaterial eingebracht werden. Bei einer solchen Ausführung kann das Federelement vorteilhaft selbst eine abdichtende Funktion erhalten, um einen Bereich und oder Seite des Federelements frei von Ausgießmaterial zu halten, wobei jedoch die Federwirkung des Federelements erhalten bleibt.

Das im zweiten Schritt verwendete Ausgießmaterial kann insbesondere einen Kunststoff und/oder ein Harz, insbesondere Epoxidharz oder Polyesterharz, beinhalten. Es hat sich gezeigt, dass die Verwendung von Epoxidharz besonders vorteilhaft ist, weil dieses nach dem Aushärten einen besonders harten und steifen Körper bildet, der besonders wirkungsvoll Verformungen des Stators und/oder des Motorgehäuses entgegen wirkt. Insbesondere kann alternativ oder zusätzlich vorteilhaft vorgesehen sein, dass das Ausgießmaterial, wenigstens im ausgehärteten Zustand, ein elektrischer Isolator ist und/oder dass das Ausgießmaterial nicht brennbar ist. Ein derart ausgebildeter Elektromotor ist besonders robust und unempfindlich gegen einen Betrieb in seinem Hoch- und Höchstlastbereich. Vorzugsweise ist der für das Ausgießmaterial zulässige Temperaturbereich, insbesondere der Temperaturbereich innerhalb dem es zu keinen temperaturbedingten Schäden des Ausgießmaterials kommt, höher als der Einsatztemperaturbereich des Motors.

Bei einer ganz besonders vorteilhaften Ausführung wird wenigstens eine axial an den Stator angrenzende Schicht, beispielsweise einer Dicke von mehreren Millimetern, beim Ausgießen ebenfalls mit Ausgießmaterial gefüllt. Insbesondere kann vorteilhaft vorgesehen sein, dass beidseitig axial an den Stator angrenzende Schichten, beispielsweise einer Dicke von mehreren Millimetern, beim Ausgießen ebenfalls mit Ausgießmaterial gefüllt werden. Eine solche Ausführung hat den besonderen Vorteil einer besseren Temperaturverteilung innerhalb des Elektromotors, wobei insbesondere niedrigere Temperaturen der Wicklungen erreicht werden.

Um zu verhindern, dass bei dem Ausgießen Ausgießmaterial in den Aufnahmeraum für den Rotor gelangt, ist bei einer besonderen Ausführung vorgesehen, dass vor dem Ausgießen in den Aufnahmeraum für einen Rotor ein, insbesondere kreiszylinderförmiger, Platzhalter eingefügt wird, der nach dem Aushärten des Ausgießmaterials wieder entfernt wird.

Vorzugsweise erfolgt das Ausgießen in der Weise, dass, insbesondere in einem einzigen Gießvorgang, ein einstückiger, insbesondere ein einziger einstückiger, Ausgießmaterialkörper hergestellt wird. Insbesondere kann vorteilhaft vorgesehen sein, dass durch das Ausgießen ein einziger einstückiger Ausgießmaterialkörper entsteht, der den Stator, vorzugsweise den gesamten Stator, einschließt. Auf diese Weise wird erreicht, dass der gesamte Bauteilblock, der innerhalb des Motorgehäuses das ausgehärtete Ausgießmaterial und den eingeschlossenen Stator aufweist, besonders stabil und steif ist.

Von besonderem Vorteil ist insbesondere ein nach dem erfindungsgemäßen Verfahren hergestellter Elektromotor. Dieser beinhaltet außer dem Motorgehäuse und dem in dem Motorgehäuse mittels des Federelements fixierten und durch das ausgehärtete Ausgießmaterial ausgesteiften Stator einen Rotor, der in dem dafür vorgesehenen Aufnahmeraum rotierbar angeordnet ist. Der Rotor ist vorzugsweise drehfest mit einer Abtriebswelle verbunden, die aus dem Motorgehäuse heraus ragt.

Die Erfindung erlaubt es vorteilhaft insbesondere, dass ein Statorjoch des Stators und das Motorgehäuse aus unterschiedlichen Materialien hergestellt sein können, ohne dass dies wesentliche Nachteile in Bezug auf die Akustik des Elektromotors hat. Insbesondere kann das Statorjoch beispielsweise aus Eisen, insbesondere Weicheisen, hergestellt sein oder Eisen, insbesondere Weicheisen, beinhalten oder aus einem Stapel von Eisenplatten, insbesondere Weicheisenplatten, hergestellt sein. Das Motorgehäuse kann vorteilhaft, insbesondere im Hinblick auf eine gewichtssparende Bauweise, beispielsweise aus Aluminium oder einer Aluminiumlegierung hergestellt sein.

Von ganz besonderem Vorteil ist ein Aktuator, der einen erfindungsgemäßen Elektromotor beinhaltet. Insbesondere kann der Aktuator wenigstens ein dem Elektromotor triebtechnisch nachgeschaltetes Getriebe, insbesondere ein Spannungswellengetriebe, aufweisen. Es ist insbesondere auch möglich, dass dem Elektromotor ein Getriebe triebtechnisch nachgeschaltet ist, das koaxial zum Elektromotor angeordnet ist. Alternativ ist es auch möglich, dass dem Elektromotor ein Getriebe triebtechnisch nachgeschaltet ist, das achsparallel zum Elektromotor angeordnet ist. Zur Ankopplung des Getriebes an den Elektromotor kann hierbei beispielsweise ein Riemengetriebe triebtechnisch dazwischen geschaltet sein.

Ein derartiger Aktuator kann vorteilhaft beispielsweise Teil einer Lenkung, insbesondere einer Überlagerungslenkung und/oder einer aktiven Lenkung und/oder einer Hilfskraftlenkung, sein. Ein derartiger Aktuator kann vorteilhaft beispielsweise auch Teil einer Vorrichtung zum Verstellen des Expansionshubes eines Verbrennungsmotors sein. Ein derartiger Aktuator kann vorteilhaft beispielsweise auch Teil eines aktiven Fahrwerks sein. Es ist vorteilhaft auch möglich, dass ein solcher Aktuator als Teil eines Roboters, insbesondere eines Industrieroboters, verwendet wird oder Teil eines Robotergelenks ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1 und 2: eine Illustration des erstens Schritts eines ersten Ausführungsbeispiels des erfindungsgemäßen Verfahrens,
- Fig. 3: eine Illustration des zweiten Schritts des ersten Ausführungsbeispiels des erfindungsgemäßen Verfahrens,
- Fig. 4: ein Motorgehäuse zur Illustration eines zweiten Ausführungsbeispiels des erfindungsgemäßen Verfahrens,
- Fig. 5: ein Statorjoch zur Illustration des zweiten Ausführungsbeispiels des erfindungsgemäßen Verfahrens,
- Fig. 6: schematisch in einer Schnittdarstellung den in das Motorgehäuse eingefügten Stator gemäß dem zweiten Ausführungsbeispiel des erfindungsgemäßen Verfahrens,
- Fig. 7: schematisch in einer Schnittdarstellung das in das Motorgehäuse eingefügte Statorjoch gemäß einem dritten Ausführungsbeispiel der Erfindung.

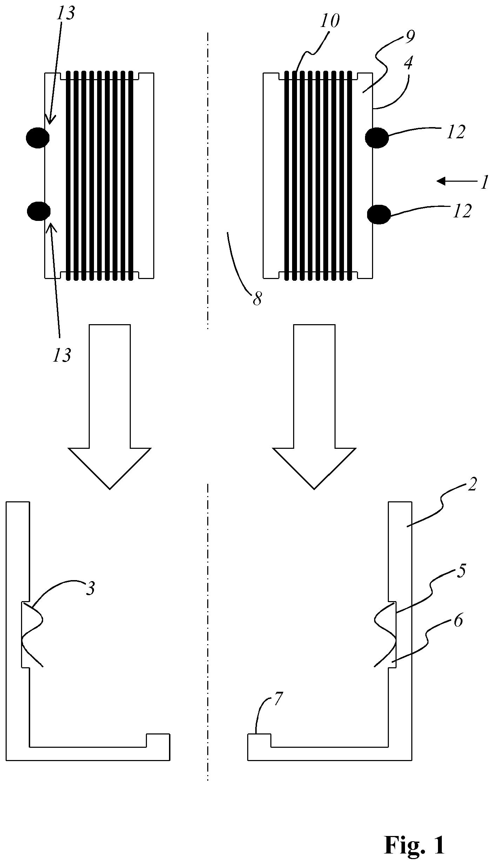

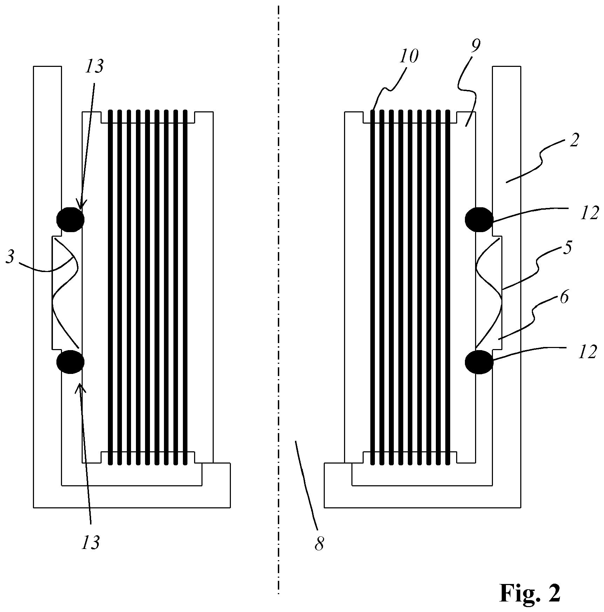

Die Figuren 1 und 2 zeigen eine Illustration des ersten Schritts eines ersten Ausführungsbeispiels des erfindungsgemäßen Verfahrens zum Herstellen eines Elektromotors, wobei ein Stator 1 in einem Motorgehäuse 2 befestigt wird. In dem dargestellten ersten Schritt wird der Stator 1 mittels eines Federelements 3 in dem Motorgehäuse 2 reibschlüssig fixiert. Der Stator 1 weist ein Statorjoch 9 mit einer kreiszylinderförmigen Außenumfangsfläche 4 auf, auf dessen Statorzähne Wickeldraht 10 aufgewickelt ist.

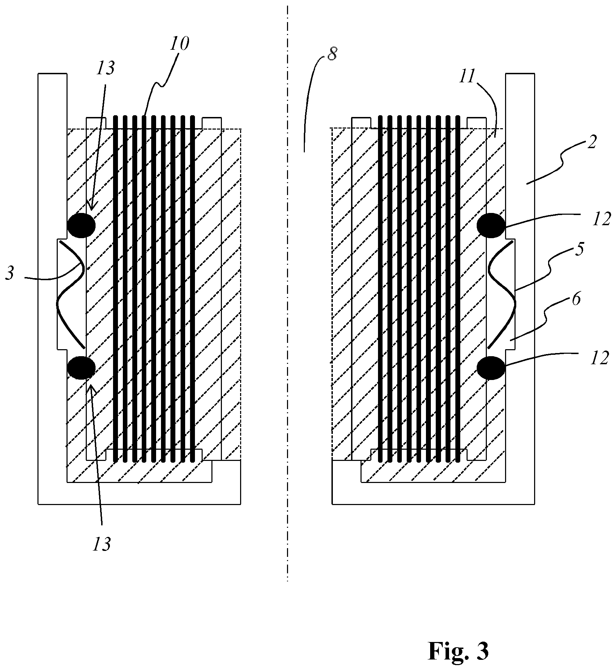

Das Federelement 3 ist bei diesem Ausführungsbeispiel hülsenförmig ausgebildet und wird so eingesetzt, dass es letztlich, was in Figur 3 zu sehen ist, den Stator 1 umgibt und einerseits an der Außenumfangsfläche 4 des Stators 1 und andererseits an einer Innenumfangsfläche 5 einer umlaufenden Ausnehmung 6, nämlich einer Nut, des Motorgehäuses 2 anliegt.

Zum Fixieren des Stators 1 wird zunächst das hülsenförmige Federelement 3 in die Ausnehmung 6 eingelegt, was Figur 1 zeigt. Dies hat den besonderen Vorteil, dass das Federelement 3 relativ zu dem Motorgehäuse 2 in axialer Richtung fixiert ist. Anschließend wird der Stator 1 axial bis zum Erreichen eines Anschlages 7 in das Federelement 3 eingepresst und so relativ zu dem Motorgehäuse 2 reibschlüssig fixiert, was in Figur 2 zu sehen ist.

In einem zweiten Schritt, der in Figur 3 illustriert ist, werden ein Teil des Zwischenraumes zwischen dem Stator 1 und dem Motorgehäuse 2 und die Freiräume innerhalb des Stators 1 mit Ausnahme eines Aufnahmeraumes 8 für einen (nicht dargestellten) Rotor mit einem härtenden Ausgießmaterial 11 (schematisch schraffiert eingezeichnet) ausgegossen. Hierbei bleiben die Ausnehmung 6 und das darin angeordnete Federelement 3 frei von Ausgießmaterial 11, was mittels elastischen O-Ringen 12 erreicht wird, die als Dichtungsvorrichtungen fungieren. Die elastischen O-Ringe 12 wurden vor dem Einfügen des Stators 1 in das Motorgehäuse 2 in außen umlaufende Nuten 13 des Stators 1 eingelegt.

Die oben axial an den Stator 1 angrenzende Schicht wird bei diesem Ausführungsbeispiel nicht mit Ausgießmaterial 11 ausgegossen, weil in diesen Bereich noch elektrisch leitende Schaltringe zur elektrischen Kontaktierung der Wicklungsdrähte 10 der einzelnen Spulen einzulegen sind.

Die unten im Bereich des Anschlags 7 axial an den Stator 1 angrenzende Schicht wird bei diesem Ausführungsbeispiel ebenfalls mit Ausgießmaterial 11 gefüllt.

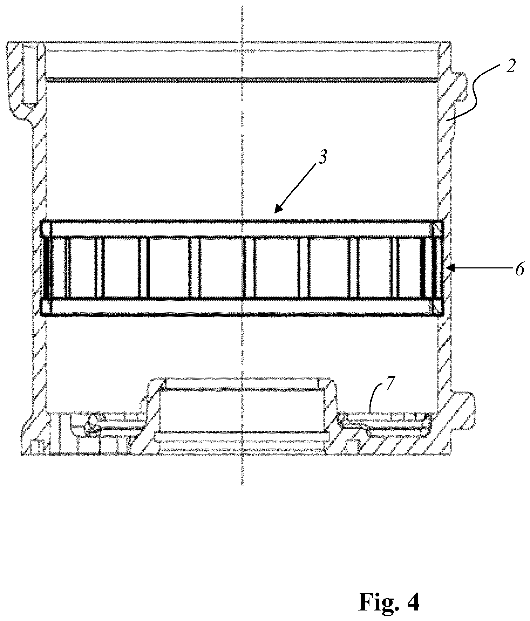

Figur 4 zeigt ein Motorgehäuse 2 zur Illustration eines zweiten Ausführungsbeispiels des erfindungsgemäßen Verfahrens. Das Motorgehäuse 2 weist eine umlaufende Ausnehmung 6, nämlich eine Nut, auf, in die ein Federelement 3, das als Toleranzhülse ausgebildet ist, eingelegt ist. In dieses Motorgehäuse 2 kann nun ein Stator 1 axial bis zum Erreichen eines Anschlages 7 eingeschoben werden, wobei der Stator 1 mittels des Federelements 3 relativ zu dem Motorgehäuse 2 fixiert wird.

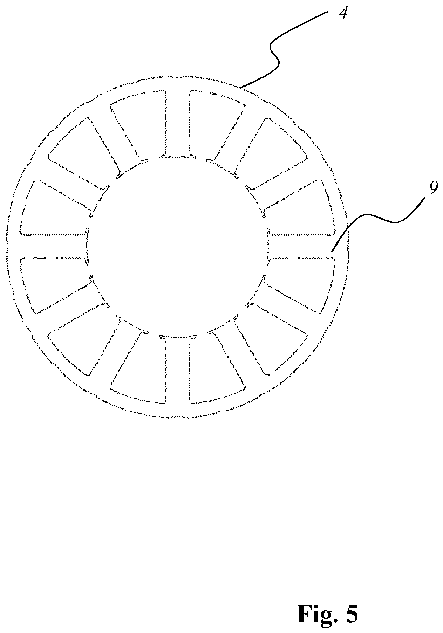

Das in dem Motorgehäuse 2 zu fixierende Satorjoch 9 kann beispielsweise so ausgebildet sein, wie in Figur 5 im Querschnitt dargestellt. Das in Figur 5 dargestellte Statorjoch 9 weist eine kreiszylinderförmige Außenumfangsfläche 4 auf.

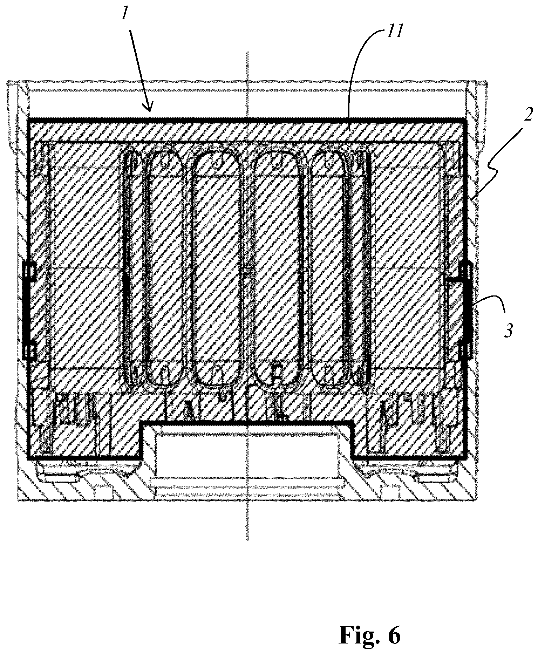

Figur 6 zeigt schematisch in einer Schnittdarstellung den in das Motorgehäuse 2 eingefügten Stator 1 gemäß dem zweiten Ausführungsbeispiel des erfindungsgemäßen Verfahrens. Der Stator 1 ist reibschlüssig mittels des Federelements 3 fixiert. Außerdem wurden der verbliebene Zwischenraum zwischen dem Stator 1 und dem Motorgehäuse 2 und die Freiräume innerhalb des Stators 1 mit Ausnahme eines (in dieser Figur nicht dargestellten) Aufnahmeraumes 8 für einen (nicht dargestellten) Rotor mit einem härtenden Ausgießmaterial 11 (schematisch schraffiert eingezeichnet) vollständig ausgegossen.

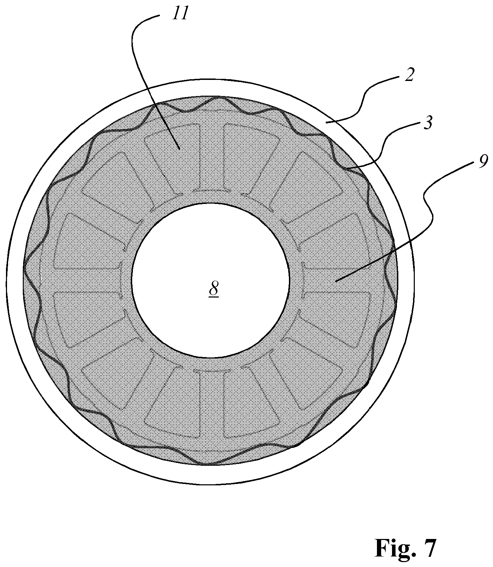

Figur 7 zeigt schematisch in einer Schnittdarstellung ein in ein Motorgehäuse 2 eingefügtes Statorjoch 9 gemäß einem dritten Ausführungsbeispiel der Erfindung. Die Drahtwicklungen auf dem Statorjoch 9 sind der besseren Übersicht halber nicht dargestellt.

Das Statorjoch 9 ist kreiszylinderförmig ausgebildet und mittels eines Federelements 3, welches aus einem wellenförmigen Blechband hergestellt ist, in einem Motorgehäuse 2 fixiert. Außerdem wurden der verbliebene Zwischenraum zwischen dem Statorjoch 9 und dem Motorgehäuse 2 und die Freiräume innerhalb des Stators 1 mit Ausnahme eines Aufnahmeraumes 8 für einen (nicht dargestellten) Rotor mit einem härtenden Ausgießmaterial 11 (grau unterlegt eingezeichnet) vollständig ausgegossen.

### Bezuaszeichenliste:

- 1: Stator
- 2: Motorgehäuse
- 3: Federelement
- 4: Außenumfangsfläche
- 5: Innenumfangsfläche
- 6: Ausnehmung
- 7: Anschlag
- 8: Aufnahmeraum für einen Rotor
- 9: Statorjoch
- 10: Wickeldraht
- 11: Ausgießmaterial
- 12: O-Ring
- 13: Nut

## Patentansprüche

1. Verfahren zum Herstellen eines Elektromotors, bei dessen Ausführung ein Stator (1) in einem Motorgehäuse (2) befestigt wird, **dadurch gekennzeichnet, dass** der Stator (1) in einem ersten Schritt mittels wenigstens eines Federelements (3) in dem Motorgehäuse (2) reibschlüssig fixiert wird, und dass in einem zweiten Schritt die Freiräume innerhalb des Stators (1) mit Ausnahme eines Aufnahmeraumes für einen Rotor (8) wenigstens teilweise mit einem härtenden Ausgießmaterial (11) ausgegossen werden.

2. Verfahren nach Anspruch 1, **dadurch gekennzeichnet, dass**
a. das Federelement (3) als, insbesondere geschlitzte, Toleranzhülse ausgebildet ist, oder dass
b. das Federelement 83) aus einem wellenförmigen Blechband hergestellt ist oder dass das Federelement (3) eine wellenförmige Prägung aufweist.

3. Verfahren nach Anspruch 1 oder 2, **dadurch gekennzeichnet, dass**
a. der Stator (1) in dem ersten Schritt mittels eines hülsenförmigen Federelements (3), derart in dem Motorgehäuse (2) fixiert wird, dass das hülsenförmige Federelement (3) den Stator (1) umgibt und einerseits an einer Außenumfangsfläche (4) des Stators (1) und andererseits an einer Innenumfangsfläche des Motorgehäuses (2) anliegt, oder dass
b. der Stator (1) in dem ersten Schritt mittels eines hülsenförmigen Federelements (3), derart in dem Motorgehäuse (2) fixiert wird, dass das hülsenförmige Federelement (3) den Stator (1) umgibt und einerseits an einer Außenumfangsfläche (4) des Stators (1) und andererseits an einer Innenumfangsfläche (5) des Motorgehäuses (2) anliegt, wobei die Außenumfangsfläche (4) des Stators (1) kreiszylinderförmig ausgebildet ist und/oder dass die Innenumfangsfläche (5) des Motorgehäuses (2) kreiszylinderförmig ausgebildet ist.

4. Verfahren nach Anspruch 3, **dadurch gekennzeichnet, dass**
a. in der Innenseite des Motorgehäuses (2) eine umlaufende Ausnehmung (6), insbesondere eine umlaufende Nut (13) oder ein umlaufender Rücksprung, ausgebildet ist, die die Innenumfangsfläche (5) aufweist, an der das hülsenförmige Federelement (3) anliegt und dass zum Fixieren des Stators (1) zunächst das hülsenförmige Federelement (3) in die Ausnehmung (6) eingelegt wird und anschließend der Stator (1) axial, insbesondere bis zum Erreichen eines Anschlages (7), in das Federelement (3) eingepresst wird, oder dass
b. in der Außenseite des Stators (1) eine umlaufende Ausnehmung (6), insbesondere eine umlaufende Nut (13) oder ein umlaufender Rücksprung, ausgebildet ist, die die Außenumfangsfläche (4) aufweist, an der das hülsenförmige Federelement (3) anliegt und dass zum Fixieren des Stators (1) zunächst das hülsenförmige Federelement (3) in die Ausnehmung (6) eingelegt wird und anschließend der Stator (1) samt dem Federelement (3) axial in das Motorgehäuse (2), insbesondere bis zum Erreichen eines Anschlages (7), eingeschoben wird.

5. Verfahren nach einem der Ansprüche 1 bis 4, **dadurch gekennzeichnet, dass**
a. durch den ersten Schritt eine Reibschlussverbindung hergestellt wird, deren Haltemoment größer, insbesondere wenigstens zehnmal größer, ganz insbesondere mehr als fünfzigmal größer, ist, als das maximale Motordrehmoment des herzustellenden Elektromotors, und/oder dass
b. wenigstens ein Teil des Zwischenraumes zwischen dem Stator (1) und dem Motorgehäuse (2) mit dem härtenden Ausgießmaterial (11) ausgegossen wird, und/oder dass wenigstens ein Teil des Zwischenraumes zwischen einer Außenumfangsfläche (4) des Stators (1) und einer Innenumfangsfläche (5) des Motorgehäuses (2) mit dem härtenden Ausgießmaterial (11) ausgegossen wird, order dass
c. wenigstens ein Teil des Zwischenraumes zwischen dem Stator (1) und dem Motorgehäuse (2) mit dem härtenden Ausgießmaterial (11) ausgegossen wird, und/oder dass wenigstens ein Teil des Zwischenraumes zwischen einer Außenumfangsfläche (4) des Stators (1) und einer Innenumfangsfläche (5) des Motorgehäuses (2) mit dem härtenden Ausgießmaterial (11) ausgegossen wird, wobei das Federelement (3) frei von Ausgießmaterial (11) bleibt und/oder wobei eine umlaufende Ausnehmung (6), insbesondere eine umlaufende Nut (13) oder ein umlaufender Rücksprung, in der das Federelement (3) wenigstens teilweise angeordnet ist, nicht ausgegossen wird, und/oder dass
d. das Ausgießmaterial (11) einen Kunststoff und/oder ein Harz, insbesondere Epoxidharz oder Polyesterharz, beinhaltet, und/oder dass das Ausgießmaterial (11), wenigstens im ausgehärteten Zustand, ein elektrischer Isolator ist und/oder dass das Ausgießmaterial (11) nicht brennbar ist, und/oder dass wenigstens eine axial an den Stator (1) angrenzende Schicht beim Ausgießen ebenfalls mit Ausgießmaterial (11) gefüllt wird oder dass beidseitig axial an den Stator (1) angrenzende Schichten beim Ausgießen ebenfalls mit Ausgießmaterial (11) gefüllt werden, oder wenigstens eine axial an den Stator (1) angrenzende Schicht nicht mit Ausgießmaterial (11) ausgegossen wird, und/oder dass
e. vor dem Ausgießen in den Aufnahmeraum für einen Rotor (8) ein, insbesondere kreiszylinderförmiger, Platzhalter eingefügt wird, der verhindert, dass Ausgießmaterial (11) beim Ausgießen in den Aufnahmeraum gelangt und der nach dem Aushärten des Ausgießmaterials (11) wieder entfernt wird, und/oder dass
f. durch das Ausgießen, insbesondere in einem einzigen Gießvorgang, ein einstückiger, insbesondere ein einziger einstückiger, Ausgießmaterialkörper hergestellt wird.

6. Elektromotor, der einen Stator (1) und ein Motorgehäuse (2) aufweist, in dem der Stator (1) fixiert ist, wobei der Stator (1) mittels wenigstens eines Federelements (3) in dem Motorgehäuse (2) reibschlüssig fixiert ist und die Freiräume innerhalb des Stators (1) mit Ausnahme eines Aufnahmeraumes, in dem ein Rotor angeordnet ist, mit einem Ausgießmaterial (11) ausgegossen sind und/oder der mit einem Verfahren nach einem der Ansprüche 1 bis 5 hergestellt ist.

7. Elektromotor nach Anspruch 6, **dadurch gekennzeichnet, dass**
a. das Federelement (3) als, insbesondere geschlitzte, Toleranzhülse ausgebildet ist, oder dass
b. das Federelement (3) aus einem wellenförmigen Blechband hergestellt ist oder dass das Federelement (3) eine wellenförmige Prägung aufweist.

8. Elektromotor nach Anspruch 6 oder 7, **dadurch gekennzeichnet, dass**
a. der Stator (1) mittels eines hülsenförmigen Federelements (3), derart in dem Motorgehäuse (2) fixiert ist, dass das hülsenförmige Federelement (3) den Stator (1) umgibt und einerseits an einer Außenumfangsfläche (4) des Stators (1) und andererseits an einer Innenumfangsfläche (5) des Motorgehäuses (2) anliegt, oder dass
b. der Stator (1) mittels eines hülsenförmigen Federelements (3), derart in dem Motorgehäuse (2) fixiert ist, dass das hülsenförmige Federelement (3) den Stator (1) umgibt und einerseits an einer Außenumfangsfläche (4) des Stators (1) und andererseits an einer Innenumfangsfläche (5) des Motorgehäuses (2) anliegt, wobei die Außenumfangsfläche (4) des Stators (1) kreiszylinderförmig ausgebildet ist und/oder dass die Innenumfangsfläche (5) des Motorgehäuses (2) kreiszylinderförmig ausgebildet ist.

9. Elektromotor nach Anspruch 8, **dadurch gekennzeichnet, dass**
a. in der Innenseite des Motorgehäuses (2) eine umlaufende Ausnehmung, insbesondere eine umlaufende Nut (13) oder ein umlaufender Rücksprung, ausgebildet ist, die die Innenumfangsfläche (5) aufweist, an der das hülsenförmige Federelement (3) anliegt, oder dass
b. in der Außenseite des Stators (1) eine umlaufende Ausnehmung, insbesondere eine umlaufende Nut (13) oder ein umlaufender Rücksprung, ausgebildet ist, die die Außenumfangsfläche (4) aufweist, an der das hülsenförmige Federelement (3) anliegt.

10. Elektromotor nach einem der Ansprüche 6 bis 9, **dadurch gekennzeichnet, dass**
a. mittels des Federelements (3) eine Reibschlussverbindung hergestellt ist, deren Haltemoment größer, insbesondere wenigstens zehnmal größer, ganz insbesondere mehr als fünfzigmal größer, ist, als das maximale Motordrehmoment des Elektromotors, und/oder dass
b. der Zwischenraum zwischen dem Stator (1) und dem Motorgehäuse (2) wenigstens teilweise mit dem Ausgießmaterial (11) ausgegossen ist, oder dass
c. der Zwischenraum zwischen dem Stator (1) und dem Motorgehäuse (2) wenigstens teilweise mit dem Ausgießmaterial (11) ausgegossen ist, wobei das Federelement (3) frei von Ausgießmaterial (11) ist und/oder dass eine umlaufende Ausnehmung (6), insbesondere eine umlaufende Nut (13) oder ein umlaufender Rücksprung, in der das Federelement (3) wenigstens teilweise angeordnet ist, nicht ausgegossen ist, und/oder dass
d. das Ausgießmaterial (11) einen Kunststoff und/oder ein Harz, insbesondere Epoxidharz oder Polyesterharz, beinhaltet, und/oder dass das Ausgießmaterial (11), wenigstens im ausgehärteten Zustand, ein elektrischer Isolator ist und/oder dass das Ausgießmaterial (11) nicht brennbar ist, und/oder dass
e. wenigstens eine axial an den Stator (1) angrenzende Schicht ebenfalls mit dem Ausgießmaterial (11) ausgegossen ist oder dass beidseitig axial an den Stator (1) angrenzende Schichten ebenfalls mit dem Ausgießmaterial (11) ausgegossen sind, oder dass wenigstens eine axial an den Stator (1) angrenzende Schicht frei von Ausgießmaterial (11) ist, und/oder dass
f. das Ausgießmaterial (11) nach dem Aushärten einen einstückigen und zusammenhängenden Körper bildet.

11. Elektromotor nach einem der Ansprüche 6 bis 10, **dadurch gekennzeichnet, dass** ein Statorjoch (9) des Stators (1) und das Motorgehäuse (2) aus unterschiedlichen Materialien hergestellt sind.

12. Elektromotor nach Anspruch 11, **dadurch gekennzeichnet, dass**
a. das Statorjoch (9) aus Eisen hergestellt ist oder Eisen beinhaltet oder aus einem Stapel von Eisenplatten hergestellt ist, und/oder dass
b. das Motorgehäuse (2) aus Aluminium oder einer Aluminiumlegierung hergestellt ist.

13. Elektromotor nach einem der Ansprüche 6 bis 12, **dadurch gekennzeichnet, dass** das Federelement (3) aus Stahl, insbesondere aus Federstahl, hergestellt ist.

14. Aktuator, insbesondere für ein Kraftfahrzeug oder für eine Lenkung oder zur Ankopplung an einen Verbrennungsmotor oder für ein aktives Fahrwerk oder zur Verstellung des Expansionshubes eines Verbrennungsmotors oder für ein Robotergelenk, wobei der Aktuator einen Elektromotor nach einem der Ansprüche 6 bis 12 aufweist.

15. Aktuator nach Anspruch 14, **dadurch gekennzeichnet, dass** der Aktuator ein dem Elektromotor triebtechnisch nachgeschaltetes Getriebe, insbesondere ein Spannungswellengetriebe, aufweist.

## Claims

1. Method for producing an electric motor, during the performance of which method a stator (1) is fastened in a motor housing (2), **characterized in that**, in a first step, the stator (1) is fixed in a frictionally locking manner by means of at least one spring element (3) in the motor housing (2), and **in that**, in a second step, the clearances within the stator (1), with the exception of a receiving space for a rotor (8), are filled at least partially with a curing filling material (11).

2. Method according to Claim 1, **characterized in that**
a. the spring element (3) is configured as an, in particular slitted, tolerance sleeve, or **in that**
b. the spring element (3) is produced from a corrugated sheet metal strip, or **in that** the spring element (3) has a corrugated stamped pattern.

3. Method according to Claim 1 or 2, **characterized in that**,
a. in the first step, the stator (1) is fixed in the motor housing (2) by means of a sleeve-shaped spring element (3) in such a way that the sleeve-shaped spring element (3) surrounds the stator (1) and bears on one side against an outer peripheral face (4) of the stator (1) and on the other side against an inner peripheral face of the motor housing (2), or **in that**,
b. in the first step, the stator (1) is fixed in the motor housing (2) by means of a sleeve-shaped spring element (3) in such a way that the sleeve-shaped spring element (3) surrounds the stator (1) and bears on one side against an outer peripheral face (4) of the stator (1) and on the other side against an inner peripheral face (5) of the motor housing (2), the outer peripheral face (4) of the stator (1) being of circular-cylindrical configuration, and/or in that the inner peripheral face (5) of the motor housing (2) is of circular-cylindrical configuration.

4. Method according to Claim 3, **characterized in that**
a. a peripheral recess (6), in particular a peripheral groove (13) or a peripheral offset, is configured in the inner side of the motor housing (2), which peripheral recess (6) has the inner peripheral face (5), against which the sleeve-shaped spring element (3) bears, and **in that**, in order to fix the stator (1), first of all the sleeve-shaped spring element (3) is inserted into the recess (6) and subsequently the stator (1) is pressed into the spring element (3) axially, in particular as far as a stop (7) being reached, or **in that**
b. a peripheral recess (6), in particular a peripheral groove (13) or a peripheral offset, is configured in the outer side of the stator (1), which peripheral recess (6) has the outer circumferential face (4), against which the sleeve-shaped spring element (3) bears, and **in that**, in order to fix the stator (1), first of all the sleeve-shaped spring element (3) is inserted into the recess (6) and subsequently the stator (1) including the spring element (3) is pushed axially into the motor housing (2), in particular as far as a stop (7) being reached.

5. Method according to one of Claims 1 to 4, **characterized in that**,
a. by way of the first step, a frictionally locking connection is established, the retaining torque of which is greater, in particular at least ten times greater, very particularly more than fifty times greater, than the maximum motor torque of the electric motor to be produced, and/or **in that**
b. at least part of the intermediate space between the stator (1) and the motor housing (2) is filled with the curing filling material (11), and/or **in that** at least part of the intermediate space between an outer peripheral face (4) of the stator (1) and an inner peripheral face (5) of the motor housing (2) is filled with the curing filling material (11), or in that
c. at least part of the intermediate space between the stator (1) and the motor housing (2) is filled with the curing filling material (11), and/or **in that** at least part of the intermediate space between an outer peripheral face (4) of the stator (1) and an inner peripheral face (5) of the motor housing (2) is filled with the curing filling material (11), the spring element (3) remaining free from filling material (11), and/or a peripheral recess (6), in particular a peripheral groove (13) or a peripheral offset, in which the spring element (3) is arranged at least partially, not being filled, and/or **in that**
d. the filling material (11) comprises a plastic and/or a resin, in particular epoxy resin or polyester resin, and/or **in that** the filling material (11) is, at least in the cured state, an electric insulator, and/or **in that** the filling material (11) is not combustible, and/or **in that** at least one layer which adjoins the stator (1) axially is likewise filled with filling material (11) during filling, or **in that** layers which adjoin the stator (1) axially on both sides are likewise filled with filling material (11) during filling, or at least one layer which adjoins the stator (1) axially is not filled with filling material (11), and/or **in that**,
e. before filling, an, in particular circular-cylindrical, spacer element is inserted into the receiving space for a rotor (8), which spacer element prevents filling material (11) passing into the receiving space during filling, and which spacer element is removed again after curing of the filling material (11), and/or **in that**
f. a monobloc, in particular a single monobloc, filling material body is produced by way of the filling, in particular in a single casting operation.

6. Electric motor which has a stator (1) and a motor housing (2), in which the stator (1) is fixed, the stator (1) being fixed in the motor housing (2) in a frictionally locking manner by means of at least one spring element (3), and the clearances within the stator (1), with the exception of a receiving space, in which a rotor is arranged, being filled with a filling material (11), and/or which is produced by way of a method according to one of Claims 1 to 5.

7. Electric motor according to Claim 6, **characterized in that**
a. the spring element (3) is configured as an, in particular slitted, tolerance sleeve, or **in that**
b. the spring element (3) is produced from a corrugated sheet metal strip, or **in that** the spring element (3) has a corrugated stamped pattern.

8. Electric motor according to Claim 6 or 7, **characterized in that**
a. the stator (1) is fixed in the motor housing (2) by means of a sleeve-shaped spring element (3) in such a way that the sleeve-shaped spring element (3) surrounds the stator (1) and bears on one side against an outer peripheral face (4) of the stator (1) and on the other side against an inner peripheral face (5) of the motor housing (2), or **in that**
b. the stator (1) is fixed in the motor housing (2) by means of a sleeve-shaped spring element (3) in such a way that the sleeve-shaped spring element (3) surrounds the stator (1) and bears on one side against an outer peripheral face (4) of the stator (1) and on the other side against an inner peripheral face (5) of the motor housing (2), the outer peripheral face (4) of the stator (1) being of circular-cylindrical configuration, and/or **in that** the inner circumferential face (5) of the motor housing (2) is of circular-cylindrical configuration.

9. Electric motor according to Claim 8, **characterized in that**
a. a peripheral recess, in particular a peripheral groove (13) or a peripheral offset, is configured in the inner side of the motor housing (2), which peripheral recess has the inner peripheral face (5), against which the sleeve-shaped spring element (3) bears, or **in that**
b. a peripheral recess, in particular a peripheral groove (13) or a peripheral offset, is configured in the outer side of the stator (1), which peripheral recess has the outer circumferential face (4), against which the sleeve-shaped spring element (3) bears.

10. Electric motor according to one of Claims 6 to 9, **characterized in that**
a. a frictionally locking connection is established by means of the spring element (3), the retaining torque of which frictionally locking connection is greater, in particular at least ten times greater, very particularly more than fifty times greater, than the maximum motor torque of the electric motor, and/or **in that**
b. the intermediate space between the stator (1) and the motor housing (2) is filled at least partially with the filling material (11), or **in that**
c. the intermediate space between the stator (1) and the motor housing (2) is filled at least partially with the filling material (11), the spring element (3) being free from filling material (11), and/or in that a peripheral recess (6), in particular a peripheral groove (13) or a peripheral offset, in which the spring element (3) is arranged at least partially, is not filled, and/or **in that**
d. the filling material (11) comprises a plastic and/or a resin, in particular epoxy resin or polyester resin, and/or **in that** the filling material (11) is, at least in the cured state, an electric insulator, and/or **in that** the filling material (11) is not combustible, and/or **in that**
e. at least one layer which adjoins the stator (1) axially is likewise filled with the filling material (11), or **in that** layers which adjoin the stator (1) axially on both sides are likewise filled with the filling material (11), or **in that** at least one layer which adjoins the stator (1) axially is free from filling material (11), and/or **in that**,
f. after curing, the filling material (11) forms a monobloc and contiguous body.

11. Electric motor according to one of Claims 6 to 10, **characterized in that** a stator yoke (9) of the stator (1) and the motor housing (2) are produced from different materials.

12. Electric motor according to Claim 11, **characterized in that**
a. the stator yoke (9) is produced from iron or comprises iron, or is produced from a stack of iron plates, and/or **in that**
b. the motor housing (2) is produced from aluminium or an aluminium alloy.

13. Electric motor according to one of Claims 6 to 12, **characterized in that** the spring element (3) is produced from steel, in particular from spring steel.

14. Actuator, in particular for a motor vehicle or for a steering system or for coupling to an internal combustion engine or for an active chassis or for adjusting an expansion stroke of an internal combustion engine or for a robot joint, the actuator having an electric motor according to one of Claims 6 to 12.

15. Actuator according to Claim 14, **characterized in that** the actuator has a gear mechanism, in particular a strain wave gear mechanism, which is connected downstream of the electric motor in drive terms.

## Revendications

1. Procédé de fabrication d'un moteur électrique, dans la réalisation duquel un stator (1) est fixé dans un carter-moteur (2), **caractérisé en ce que**, dans une première étape, le stator (1) est fixé par frottement dans le carter-moteur (2) au moyen d'au moins un élément à ressort (3), et **en ce que**, dans une deuxième étape, les espaces libres à l'intérieur du stator (1), à l'exception d'un espace de réception d'un rotor (8), sont remplis au moins partiellement d'un matériau de coulée durcissant (11).

2. Procédé selon la revendication 1, **caractérisé en ce que**
a. l'élément à ressort (3) est réalisé sous la forme d'un manchon de tolérance, en particulier fendu, ou **en ce que**
b. l'élément à ressort (3) est réalisé à partir d'une bande de tôle ondulée ou **en ce que** l'élément à ressort (3) présente un gaufrage ondulé.

3. Procédé selon la revendication 1 ou 2, **caractérisé en ce que**
a. dans la première étape le stator (1) est fixé dans le carter-moteur (2) au moyen d'un élément à ressort (3) en forme de manchon de manière à ce que l'élément à ressort (3) en forme de manchon entoure le stator (1) et vienne en appui d'une part sur une surface périphérique extérieure (4) du stator (1) et d'autre part sur une surface périphérique intérieure du carter-moteur (2), ou **en ce que**
b. dans la première étape le stator (1) est fixé dans le carter-moteur (2) au moyen d'un élément à ressort (3) en forme de manchon de manière à ce que l'élément à ressort (3) en forme de manchon entoure le stator (1) et vienne en appui d'une part sur une surface périphérique extérieure (4) du stator (1) et d'autre part sur une surface périphérique intérieure (5) du carter-moteur (2), la surface périphérique extérieure (4) du stator (1) ayant la forme d'un cylindre circulaire et/ou la surface périphérique intérieure (5) du carter-moteur (2) se présentant sous la forme d'un cylindre circulaire.

4. Procédé selon la revendication 3, **caractérisé en ce que**
a. un évidement circonférentiel (6), en particulier une rainure circonférentielle (13) ou un retrait circonférentiel, est formé sur le côté intérieur du carter-moteur (2), lequel évidement comporte la surface circonférentielle intérieure (5) sur laquelle l'élément à ressort (3) en forme de manchon vient appui et **en ce que**, pour fixer le stator (1), l'élément à ressort (3) en forme de manchon est d'abord inséré dans l'évidement (6) et le stator (1) est ensuite enfoncé axialement dans l'élément à ressort (3), notamment jusqu'à atteindre une butée (7), ou **en ce que**
b. un évidement circonférentiel (6), en particulier une rainure circonférentielle (13) ou un retrait circonférentiel, est formé dans le côté extérieur du stator (1), lequel évidement comporte la surface circonférentielle extérieure (4) sur laquelle l'élément à ressort (3) en forme de manchon vient en appui et **en ce que**, pour fixer le stator (1), l'élément à ressort (3) en forme de manchon est d'abord inséré dans l'évidement (6) et le stator (1) pourvu de l'élément à ressort (3) est poussé axialement dans le carter-moteur (2), en particulier jusqu'à atteindre une butée (7).

5. Procédé selon l'une des revendications 1 à 4, **caractérisé en ce que**
a. la première étape réalise une liaison par friction dont le couple de maintien est supérieur, notamment au moins dix fois supérieur, notamment plus de cinquante fois supérieur, au couple moteur maximal du moteur électrique à réaliser, et/ou **en ce que**
b. au moins une partie de l'espace intermédiaire ménagé entre le stator (1) et le carter-moteur (2) est remplie du matériau de coulée durcissant (11), et/ou **en ce qu'**au moins une partie de l'espace intermédiaire ménagé entre une surface périphérique extérieure (4) du stator (1) et une surface périphérique intérieure (5) du carter-moteur (2) est remplie du matériau de coulée durcissant (11), ou **en ce que**
c. au moins une partie de l'espace intermédiaire ménagé entre le stator (1) et le carter-moteur (2) est remplie du matériau de coulée durcissant (11), et/ou **en ce qu'**au moins une partie de l'espace intermédiaire ménagé entre une surface périphérique extérieure (4) du stator (1) et une surface périphérique intérieure (5) du carter-moteur (2) est remplie du matériau de coulée durcissant (11), l'élément à ressort (3) restant exempt de matériau de coulée (11) et/ou un évidement circonférentiel (6), en particulier une rainure circonférentielle (13) ou un retrait circonférentiel, dans lequel l'élément à ressort (3) est disposé au moins partiellement, n'étant pas coulé, et/ou **en ce que**
d. le matériau de coulée (11) contient une matière synthétique et/ou une résine, en particulier une résine époxy ou une résine polyester, et/ou **en ce que** le matériau de coulée (11), au moins à l'état durci, est un isolant électrique et/ou **en ce que** le matériau de coulée (11) n'est pas combustible, et/ou **en ce qu'**au moins une couche axialement adjacente au stator (1) est également remplie de matériau de coulée (11) pendant la coulée, ou **en ce que** des couches axialement adjacentes au stator (1) des deux côtés sont également coulées avec le matériau de coulée (11) pendant la coulée, ou au moins une couche axialement adjacente au stator (1) n'est pas coulée avec le matériau de coulée (11), et/ou en ce que
e. avant la coulée un élément d'espacement, en particulier en forme de cylindre circulaire, est inséré dans l'espace de réception d'un rotor (8), lequel élément d'espacement empêche le matériau de coulée (11) de pénétrer dans l'espace de réception lors de la coulée et est à nouveau retiré après que le matériau de coulée (11) a durci, et/ou **en ce que**
f. la coulée permet de produire, en particulier dans un processus de coulée, un corps de matériau de coulée monobloc, en particulier un seul corps de matériau de coulée monobloc.

6. Moteur électrique qui comporte un stator (1) et un carter-moteur (2) dans lequel le stator (1) est fixé, le stator (1) étant fixé par frottement dans le carter-moteur (2) au moyen d'au moins un élément à ressort (3) et les espaces libres à l'intérieur du stator (1), à l'exception d'un espace de réception dans lequel un rotor est disposé, étant remplis d'un matériau de coulée (11) et/ou qui est produit par un procédé selon l'une des revendications 1 à 5.

7. Moteur électrique selon la revendication 6, **caractérisé en ce que**
a. l'élément à ressort (3) est réalisé sous la forme d'un manchon de tolérance, en particulier fendu, ou **en ce que**
b. l'élément à ressort (3) est réalisé à partir d'une bande de tôle ondulée ou **en ce que** l'élément à ressort (3) présente un gaufrage ondulé.

8. Moteur électrique selon la revendication 6 ou 7, **caractérisé en ce que**
a. le stator (1) est fixé dans le carter-moteur (2) au moyen d'un élément à ressort (3) en forme de manchon de manière à ce que l'élément à ressort (3) en forme de manchon entoure le stator (1) et vienne en appui d'une part sur une surface périphérique extérieure (4) du stator (1) et d'autre part sur une surface périphérique intérieure (5) du carter-moteur (2), ou **en ce que**
b. le stator (1) est fixé dans le carter-moteur (2) au moyen d'un élément à ressort (3) en forme de manchon de manière à ce que l'élément à ressort (3) en forme de manchon entoure le stator (1) et vienne en appui d'une part sur une surface périphérique extérieure (4) du stator (1) et d'autre part sur une surface périphérique intérieure (5) du carter-moteur (2), la surface périphérique extérieure (4) du stator (1) étant réalisée sous la forme d'un cylindre circulaire et/ou la surface périphérique intérieure (5) du carter-moteur (2) étant réalisée sous la forme d'un cylindre circulaire.

9. Moteur électrique selon la revendication 8, **caractérisé en ce que**
a. un évidement circonférentiel, en particulier une rainure circonférentielle (13) ou un retrait circonférentiel, est formé à l'intérieur du carter-moteur (2) et comporte la surface périphérique intérieure (5) sur laquelle l'élément à ressort (3) en forme de manchon vient en appui, ou **en ce que**
b. un évidement circonférentiel, en particulier une rainure circonférentielle (13) ou un retrait circonférentiel, est formé dans le côté extérieur du stator (1) et comporte la surface circonférentielle extérieure (4) sur laquelle l'élément à ressort (3) en forme de manchon vient en appui.

10. Moteur électrique selon l'une des revendications 6 à 9, **caractérisé en ce que**
a. une liaison par friction, dont le couple de maintien est supérieur, en particulier au moins dix fois supérieur, en particulier plus de cinquante fois supérieur, au couple moteur maximal du moteur électrique, est réalisée au moyen de l'élément à ressort (3) et/ou **en ce que**
b. l'espace intermédiaire ménagé entre le stator (1) et le carter-moteur (2) est au moins partiellement rempli du matériau de coulée (11), ou **en ce que**
c. l'espace intermédiaire ménagé entre le stator (1) et le carter-moteur (2) est au moins partiellement rempli du matériau de coulée (11), l'élément à ressort (3) étant exempt de matériau de coulée (11) et/ou **en ce qu'**un évidement circonférentiel (6), en particulier une rainure circonférentielle (13) ou un retrait circonférentiel, dans lequel l'élément à ressort (3) est disposé au moins partiellement, n'est pas rempli, et/ou **en ce que**
d. le matériau de coulée (11) contient une matière synthétique et/ou une résine, en particulier une résine époxy ou une résine polyester, et/ou **en ce que** le matériau de coulée (11), au moins à l'état durci, est un isolant électrique et/ou **en ce que** le matériau de coulée (11) n'est pas combustible, et/ou **en ce que**
e. au moins une couche axialement adjacente au stator (1) est également coulée avec le matériau de coulée (11), ou **en ce que** des couches axialement adjacentes au stator (1) des deux côtés sont également coulées avec le matériau de coulée (11), ou **en ce qu'**au moins une couche axialement adjacente au stator (1) est exempte de matériau de coulée (11), et/ou **en ce que**
f. le matériau de coulée (11) forme un corps monobloc et continu après le durcissement.

11. Moteur électrique selon l'une des revendications 6 à 10, **caractérisé en ce qu'**une culasse statorique (9) du stator (1) et le carter-moteur (2) sont réalisés à partir de matériaux différents.

12. Moteur électrique selon la revendication 11, **caractérisé en ce que**
a. la culasse statorique (9) est en fer ou contient du fer ou est réalisée à partir d'un empilement de plaques de fer, et/ou **en ce que**
b. le carter-moteur (2) est en aluminium ou en alliage d'aluminium.

13. Moteur électrique selon l'une des revendications 6 à 12, **caractérisé en ce que** l'élément à ressort (3) est en acier, notamment en acier à ressort.

14. Actionneur, destiné notamment à un véhicule automobile ou à une direction ou permettant l'accouplement à un moteur à combustion interne ou destiné à un mécanisme de roulement ou permettant de régler la course de détente d'un moteur à combustion interne ou destiné à une articulation de robot, l'actionneur comportant un moteur électrique selon l'une des revendications 6 à 12.

15. Actionneur selon la revendication 14, **caractérisé en ce que** l'actionneur comporte une transmission, notamment une transmission à arbre de tension, qui est montée en entraînement en aval du moteur électrique.
